# EUROPEAN PATENT APPLICATION

(11) **EP 4 265 320 A1**
(43) Date of publication of application: **25.10.2023**
(21) Application number: 20966079.4
(22) Date of filing: 21.12.2020
(51) Int. Cl.: B01D 53/26, B01D 53/28, B01D 45/08, B60T 17/00, B60T 17/02

(54) **AIR DRYER CARTRIDGE**

(30) Priority: 18.12.2020 KR 20200178407
(71) Applicant: Semyungtech Co., Ltd., Seoul 07445 (KR)
(72) Inventor: MOON, Seong-won, Asan-si Chungcheongnam-do 31471 (KR); PARK, Sang-sun, Iksan-si Jeollabuk-do 54661 (KR)
(74) Representative: Viering, Jentschura & Partner mbB Patent- und Rechtsanwälte
(86) International application number: PCT/KR2020/018834
(87) International publication number: WO 2022/131425

(57) **Abstract**

The present disclosure relates to a dryer cartridge that can improve the effect of cleaning compressed air by filtering out water, oil, and foreign substances, which are contained in compressed air, through several filtering stage therein and collect oil at the bottom. In the present invention, an oil collecting air dryer cartridge for a commercial vehicle, the air dryer cartridge is configured to include a housing having having an open upper end and a closed lower end, a cartridge container located inside the housing and containing a drying agent therein, and an oil collecting support for collecting oil separated from compressed air flowing into the cartridge container. Further, when a narrow channel for compressed air is formed between a cartridge body and a cartridge housing, a collision member that is a pre-filtering member that can primarily filter out oil, etc. is formed between the cartridge body and the housing, whereby it is possible to improve the performance of removing oil and water from a filter cartridge.

## Description

### Technical Field

The present disclosure relates to an air dryer cartridge that is applied to a compressed air processing system and, more particularly, to a filter cartridge of an air dryer that is applied to a compressed air processing system for a commercial vehicle.

### Background Art

Commercial vehicles are equipped with various operation systems that use air pressure to control the operation of the large and heavy commercial vehicles. For example, a service brake system, a pneumatic suspension system, a parking brake system, etc. are such pneumatic systems. Compressed air at high pressure is required to drive such pneumatic systems. Such compressed air is produced through a compressor, which is driven by an engine or a driving motor, and then sent to the reservoirs of systems that use the compressed air.

The compressed air that is supplied through a compressor contains foreign substances including oil and water. Foreign substances such as oil and water in compressed air have a bad influence on systems such as causing breakdown or deteriorating durability of pneumatic systems.

Accordingly, systems that supply compressed air are equipped with a dryer unit including a filter cartridge to produce dry air by filtering out foreign substances, such as oil, and absorbing water from the compressed air.

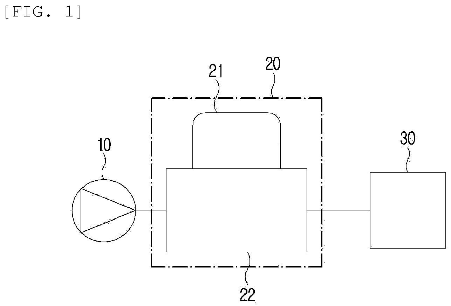

FIG. 1 shows an example of a compressed air processing system equipped with a dryer unit in the related art.

As shown in FIG. 1, while high-pressure compressed air produced by a compressor 10 passes through a dryer unit 20, oil and water are removed. In particular, the compressed air flowing in the dryer unit 20 is processed through a filter cartridge 21, and the processed compressed air is supplied to each consumption circuit through a valve assembly 22.

Meanwhile, when sufficient dehumidifying performance is not achieved, such as when the dryer unit fully filled with a drying agent, a regeneration process for recovering the drying agent performance by returning dry compressed air to the dryer unit may be performed, in which the compressed air substantially flows in the opposite direction to that when it is supplied.

In compressed air processing systems, not only contaminant particles contained in suctioned air, but oil and carbon black particles introduced in compressed air from a compressor during a compression process are removed from the compressed air. In addition, water existing in the compressed air is also removed. To this end, an air dryer cartridge that can dehumidify compressed air, and preferably, can absorb even oil and contaminant particles is provided for compressed air processing systems for a commercial vehicle.

In relation to this, examples of a filter cartridge of the related art are disclosed in Korean Patent No. 10-2018-0118715 and Korean Patent No. 10-2079405.

Air dryer units of the related art are generally configured such that dehumidifying performance is secured by filling the dryer unit with a drying agent and an oil adsorption filter is installed around the inlet of compressed air to be able to remove oil. However, the structures of the cartridges for dryers of the related art have limitation in sufficiently adsorbing and removing oil using only the oil adsorption filter. Further, a check valve is installed adjacent to the adsorption filter such that compressed air goes around the oil adsorption filter in regeneration. However, there is a problem that since the check valve is additionally installed, the manufacturing cost is increased and complete sealing cannot be achieved around the check valve.

Accordingly, it is required to further improve the performance of removing oil and water of a filter cartridge in order to improve the fuel efficiency of commercial vehicles and durability of systems. Further, there is a need for an air dryer cartridge that enables a filter cartridge can be easily installed and replaced when it is periodically replaced and that can reduce the replacement cost by designing a filter cartridge that can be manufactured at a lower cost.

### Disclosure

### Technical Problem

The present disclosure has been made in an effort to solve the problems described above and an objective of the present disclosure is to provide a dryer cartridge that can improve the effect of cleaning compressed air by filtering out water, oil, and foreign substances, which are contained in compressed air, through several filtering stage therein.

### Technical Solution

In order to achieve the objectives, a preferred embodiment of the present disclosure provides an oil-collecting air dryer cartridge for a commercial vehicle, the air dryer cartridge including: a housing having an open upper end and a closed lower end; a cartridge container located inside the housing and containing a drying agent; and an oil collecting support for collecting oil separated from the compressed air flowing into the cartridge container.

In particular, when a narrow compressed air channel is formed between a cartridge body and a cartridge housing, a collision member that is a pre-filtering member that can primarily filter out oil, etc. is formed between the cartridge body and the housing, whereby it is possible to improve the performance of removing oil and water from a filter cartridge.

Further, in the present disclosure, since compressed air with oil, etc. primarily filtered out by the collision member passes through the oil adsorption filter, there is an effect that it is possible to improve the lifespan of the oil adsorption filter by reducing the degree of contamination of the oil adsorption filter.

Furthermore, another object of the present invention is to provide an eco-friendly air dryer cartridge by collecting the filtered oil so that it is not discharged to the outside and configuring the collected oil to be discharged at a desired time and place.

### Advantageous Effects

According to the present disclosure, since a collision member that can primarily filter out oil, etc. from compressed air before the compressed air flows into the oil adsorption filter is disposed in the narrow channel between the cartridge body and the housing, there is an effect that it is possible to improve the performance of removing oil and water from a filter cartridge.

In particular, according to the present disclosure, there is an advantage that it is possible to improve the effect of cleaning compressed air by filtering out water, oil, and foreign substances, which are contained in compressed air, through several steps therein, using the collision member and the oil adsorption filter.

Further, in the present disclosure, since oil, etc. of compressed air are primarily filtered out by the collision member and then the compressed air passes through the oil adsorption filter, there is an effect that it is possible to improve the lifespan of the oil adsorption filter by reducing the degree of contamination of the oil adsorption filter.

Further, according to a preferred embodiment of the preset disclosure, since a '⊏' shape gasket is installed at the valve housing, there is an effect that the sealing ability according to internal pressure is improved.

Further, according to a preferred embodiment of the present invention, it is possible to solve the environmental pollution problem caused by oil discharge by collecting separated oil through an oil collecting support and storing it so that the collected oil does not discharged.

### Description of Drawings

FIG. 1 shows an example of a compressed air processing system equipped with a dryer unit in the related art.
FIG. 2 shows a cross-section of a dryer cartridge according to a preferred embodiment of the present disclosure.
FIG. 3 is an exploded view of the dryer cartridge according to a preferred embodiment of the present disclosure.
FIG. 4 is a cross-sectional view taken along line A-A' of FIG. 2.
FIG. 5 is an enlarged view of the lower opening of the second partition wall of FIG. 2.
FIG. 6 shows airflow when compressed air is supplied and regenerated in the example of FIG. 2.
FIGS. 7A to 7D show a preferred example of the detailed structure of a collision member installed on the outer wall of the dryer cartridge according to the present disclosure.
FIGS. 8A to 8D show another example of the detailed structure of the collision member installed on the outer wall of the dryer cartridge according to the present disclosure.
FIGS. 9A and 9B show an example in which the side angle of the collision member is changed.

### Best Mode

A preferred embodiment of the present disclosure provides an oil collecting air dryer cartridge for a compressed air processing system for a commercial vehicle, the air dryer cartridge comprising: a housing having having an open upper end and a closed lower end; a cartridge container located inside the housing and containing a drying agent therein; and an oil collecting support for collecting oil separated from compressed air flowing into the cartridge container.

Further, the oil collecting support includes at least one partition wall part standing on a bottom surface inside the housing and a base plate formed on an upper end of the partition wall part.

The air dryer cartridge further comprises a check valve configured to allow one-way flow while contacting an inner wall of the housing at a radial end of the base plate of the oil collecting support.

The air dryer cartridge according to the present disclosure further comprises an oil adsorption filter installed on the cartridge body to filter oil at the front end of the inlet of the cartridge body, and the check valve is configured to allow downward flow toward the bottom surface of the housing.

In this case, the cartridge container may be located above the oil collecting support, and the cartridge container may include a cylindrical cartridge having an air outlet formed in the center of the upper end and an open lower end, and a cartridge cap having an air inlet and coupled to the open lower end of the cartridge body.

Further, the air dryer cartridge may include a spring member installed on a seating groove of the base plate for collecting oil to press the cartridge container; and a cover configured to close the open upper end of the housing and having an intake port and a discharge port so that air can move into the housing.

Meanwhile, the partition wall part of the oil collecting support may include two or more cylindrical partition walls, and all of the cylindrical partition walls may be concentric. Further, the cylindrical partition walls may form a plurality of openings through which fluid flows between a bottom surface of the housing and lower portions of the cylindrical partition walls. Preferably, the lower portions of the cylindrical partition walls may have a crown shape.

Further, a gap for movement of compressed air may be formed between an outer surface of the cartridge container and an inner wall of the housing, and a collision member may be formed in the gap. In this case, the collision member may protrude from the outer surface of the cartridge container or the inner wall of the housing, and may be comprised of at least one blade type protrusion continuously extending to be able to guide air moving through the gap.

Further, the collision member may be a spiral blade type protrusion or a blade type protrusion in which a horizontal section parallel with a horizontal plane perpendicular to a central axis of the cartridge container and an inclined section inclined at a predetermined angle with respect to the horizontal plane are alternately disposed. And, several flow holes may be formed in the direction of the central axis at the horizontal section of the blade type protrusion.

Further, the collision member has: several horizontal blade protrusions spaced apart from each other and extending in parallel with the horizontal plane perpendicular to the central axis of the cartridge container; and several flow holes formed at the horizontal blade protrusions so that air can move between the upstream side and the downstream side of the gap.

According to another embodiment of the present disclosure, the collision member is comprised of several protrusions protruding from the outer surface of the cartridge container or the inner wall of the housing and spaced apart from each other to interfere with flow of air between the upstream side and the downstream side of the gap. In this case, the protrusions may be V-shaped protrusions or circular protrusions.

Further, the protrusions may be formed on the outer surface of the cartridge container, and are formed to face down such that an angle θ made between the bottom of the protrusion and the outer surface of the cartridge container is in the range of 0° < θ ≤ 90°

### Mode for Invention

Embodiments to be described hereafter are provided only for detailed description for those skilled in the art to be able to easily achieve the present disclosure without limiting the protective range of the present disclosure. Accordingly, some components may be substituted or changed without departing from the necessary range of the present disclosure.

When a component is 'connected' with another component in the following description, it includes not only direct connection of them, but connection of them with another element or device therebetween. Further, unless explicitly described otherwise, 'comprising' any components will be understood to imply the inclusion of other components rather than the exclusion of any other components.

An air dryer cartridge described herein, similar to dryer cartridges of the related art, is configured to remove oil in compressed air and dry and supply compressed air in one direction, and is configured to be able to perform a process of sending the compressed air in the opposite direction for regeneration of the cartridge and then discharging the compressed air to the atmosphere.

To this end, the air dryer cartridge according to the present disclosure is also configured to include an intake port through which compressed air flows inside and a discharge port through which compressed air is discharged. The terms `inflow' and 'discharge' are concepts that are relatively determined in accordance with the operation state of a compressed air processing system, and are related to the flow direction of compressed air. However, for the convenience of description herein, `inflow' and 'discharge' are described on the basis of the state in which compressed air is supplied, that is, the state in which air produced by a compressor flows in the air dryer cartridge and is then discharged to a valve assembly. For reference, since airflow is generated in the opposite direction in the cartridge in regeneration, it would be sufficiently understood by those skilled in the art that `inflow' and 'discharge' are opposite to when compressed air is supplied.

Further, the expression that compressed air is 'processed' herein means that oil, water, and foreign substances in compressed air are filtered out while the compressed air passes through the filter cartridge.

An air dryer cartridge according to preferred embodiments of the present disclosure is described hereafter with reference to the accompanying drawings.

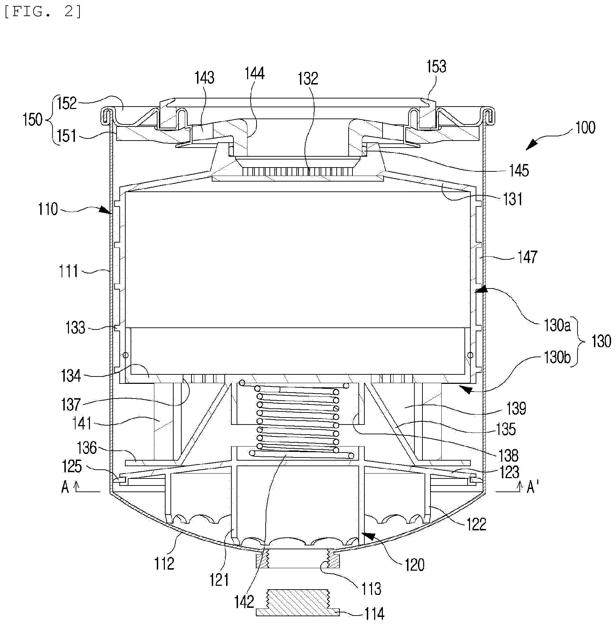

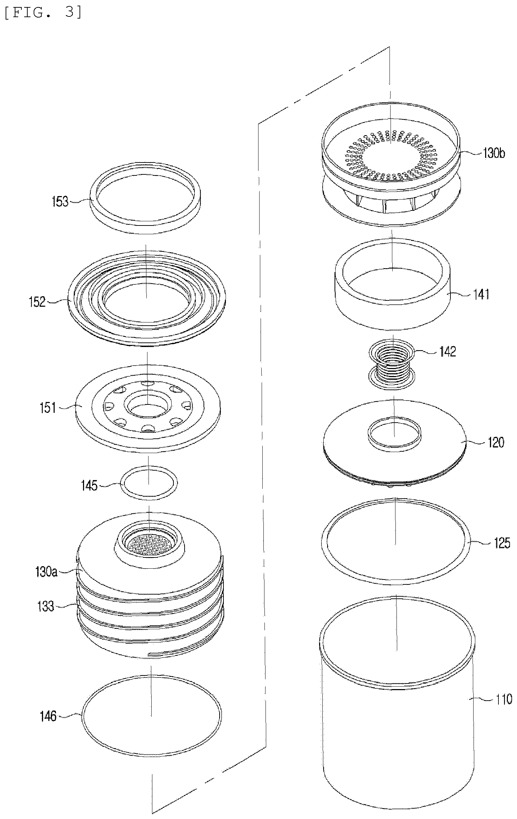

FIG. 2 shows a cross-section of a dryer cartridge according to a preferred embodiment of the present disclosure and FIG. 3 shows disassembled components of the dryer cartridge of FIG. 2.

An air dryer cartridge 100 according to a preferred embodiment of the present disclosure is formed in a substantially rotation-symmetric shape with respect to a vertical central axis, in which a cartridge container 130 filled with a drying agent and an oil collecting support is accommodated in a substantially cylindrical housing 110. As shown in FIG. 2, the cylindrical housing 110 forms the outer housing of the air dryer cartridge 100 to protect the internal components of the cartridge and prevent leakage of compressed air introduced into the cartridge.

Accordingly, the cylindrical housing 110 has a structure with an open end, and the opposite end is closed. For example, the housing 110 may be a cup shape manufactured by deep drawing a thin metal plate, and has an open end.

In the present invention, compressed air generated from the compressor is introduced from the upper surface of the housing 110, flows toward the bottom of the housing 110, passes through the internal desiccant, and then is discharged to the outside through the upper surface of the housing 110.

Therefore, the housing 110 in this embodiment may be formed in a structure in which the lower end is closed and the oil separated in the flow process of the compressed air is easily collected. Preferably, a housing bottom surface 112 may be formed in a round shape. For example, as shown in FIG. 2, the housing bottom surface 112 may be formed as a downwardly convex spherical surface.

As shown in FIGS. 2 and 3, the oil collecting support 120 and the cartridge container 130 are sequentially stacked from the housing bottom surface 112, and the open surface of the housing 110 is closed by a cover 150. A spring member 142 is inserted between the cartridge container 130 and the oil collecting support 120. The density of the drying agent stored in the cartridge container 130 increases, as the spring member 142 presses the cartridge container 130.

In particular, in a preferred embodiment of the present invention, the spring member 142 is located between the cartridge container 130 and the oil collecting support 120 at the lower end of the housing 110, and presses the cartridge container 130 upward in a bottom-up structure.

In addition, a discharge port for moving the compressed air passing through the cartridge container 130 toward the valve assembly is formed in the center of the cover 150, and an intake port is formed around the discharge port to introduce compressed air generated by the compressor.

According to the present embodiment, in order to increase space utilization and compactly configure the air dryer cartridge 100 having a bottom-up structure, an oil adsorption filter 141 is located in the space around the spring member 142.

In particular, the present invention is characterized in that oil is primarily filtered through a collision member formed in the gap 147 between the outer wall of the cartridge container 130 and the inner wall of the housing 110 before passing through the oil adsorption filter 141.

Hereinafter, a configuration of the cartridge container 130 for primarily filtering oil will be described with reference to FIGS. 2 and 3.

The cartridge container 130 may refer to the entire container for accommodating a drying agent, and the cartridge container 130 may include a substantially cylindrical cartridge body 130a and a cartridge cap 130b covering an opening of the cartridge body 130a. However, the divided form of the cartridge container 130 is not limited to the presented example, and is applicable without limitation as long as it can accommodate the drying agent therein.

The drying agent that is filled in the cartridge container 130 may be a powder-type desiccant having a dehumidifying function such as zeolite, or may be a structure impregnated with a drying agent. The drying agent fully fills the internal space of the cartridge container 130, and the density of the drying agent can be sufficiently increased when the cartridge container 130 is pressed by a spring member 142.

In the embodiment of FIG. 2, it is illustrated that the cartridge container 130 is divided into a cartridge body 130a and a cartridge cap 130b. Specifically, the cartridge container 130 includes a cartridge body 130a having an open lower end and a substantially cylindrical shape, and a cartridge cap 130b covering the open lower end of the cartridge body 130a. An air outlet 132 is formed in the center of the upper end of the cartridge body 130a. In this case, a porous member such as a nonwoven fabric may be installed in the air outlet to prevent escaping of the desiccant contained therein through the central air outlet 132 of the cartridge body 130a. In addition, a sealing member may be inserted between the cartridge body 130a and the cartridge cap 130b for sealing.

The cartridge body 130a is in contact with the cover 150, and provides a flow path through which air introduced through the intake port of the cover 150 moves to the bottom of the housing 110.

To this end, the cartridge body 130a forms a gap 147 between the inner wall of the housing 110 and the outer wall of the cartridge body 130a, and includes a shoulder part 131 extending from the central air outlet 132 toward the outer wall of the housing 110.

The cylindrical cartridge body 130a forms a gap 147 at a substantially constant interval with the inner wall of the housing 110, and a collision member 133 is formed in the gap 147 to primarily separate the oil contained in the compressed air.

The collision member 133 protrudes from the cartridge container 130 or the housing 110 and is configured such that oil and foreign substances are primarily filtered out while the air moving through the gap 147 bumps against collision member 133. Preferably, the collision member 133 may be configured to be in contact with the cartridge container 130 or the housing 110. The detailed configuration of the collision member will be described below.

The cartridge cap 130b is a cylindrical cover coupled to an open lower end of the cartridge body 130a, and seals an inner surface of the cartridge body 130a by a sealing member 146.

An inlet 137 for introducing compressed air into the desiccant is formed on the cover surface 134 of the cartridge cap 130b, and an oil-absorption filter 141 is installed to secondarily filter oil and foreign substances before the compressed air flows into the inlet 137. The oil adsorption filter 141 may be an annular filter member installed on the cartridge cap 130b.

Further, the cartridge cap 130b has a central seating groove 138 for seating the spring member 142, and includes a support structure extending radially from the seating groove so that the oil adsorption filter 141 can be installed.

Specifically, as shown in FIG. 2, the cartridge cap 130b includes a guide surface 135 inclined downward from the cover surface 134 near the central seating groove 138, and a flange part 136 extending radially from the guide surface.

In addition, a plurality of ribs 139 extending radially from the center are formed on the guide surface 135, and an inlet 137 on the cover surface 134 may be located between the adjacent ribs 139.

A plurality of radially extending ribs 139 are not only reinforcing ribs for structurally reinforcing the cartridge container 130, but also support the oil adsorption filter 141 to be fixedly installed at the front ends of the inlet 137. The oil adsorption filter 141 is provided to secondarily filter the compressed air filtered by the collision member, and is made of a porous material or a non-woven fabric. In general, the oil adsorption filter 141 is formed by wrapping a porous material or a non-woven fabric around the ribs 139. Accordingly, the oil adsorption filter 141 is fixedly installed while being spaced apart from the inlet 137 of the cartridge cap 130b by the ribs 139. In addition, as in FIGS. 2 and 3, the oil absorption filter 141 is wrapped around the ribs 139 so that it can be wound while being completely in close contact between the cover surface 134 and the flange portion 136. Therefore, the filtering performance of the oil absorption filter 141 can be maximized by completely blocking the air flow bypassing the oil absorption filter 141.

In addition, as shown in FIG. 3, the inlet 137 may be formed in all areas inside the oil adsorption filter 141 except for the position where the rib 139 is installed in the cartridge cap 130b. Accordingly, by making the area of the inlets 137 sufficiently large, the contact area between the drying agent and the compressed air may be increased, thereby improving the drying efficiency of the drying agent. In this case, some of the oils passing through the inclined guide surface at the bottom of the inlet may also be guided to of the oil collecting support at the lower side.

Through such a configuration, in the case of compressed air introduced from the compressor, the oil can be filtered through two stages before passing through the drying agent, thereby significantly improving the oil removal performance.

The oil collecting support 120 for collecting separated oil is positioned on the bottom surface 112 of the housing. In addition, the oil collecting support 120 is installed on the bottom of the housing 110 and is configured to support the components accommodated in the housing 110.

The oil collecting support 120 may include at least one partition wall part standing on the bottom surface the housing 110 and a base plate 123 formed on the upper end of the partition wall part.

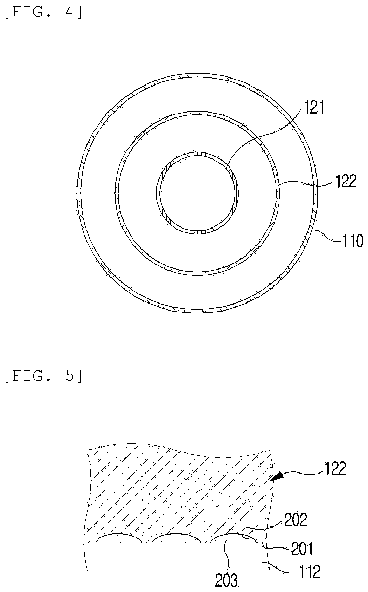

The partition wall part is erected in close contact with the bottom surface of the housing 110 and supports the internal components of the housing through the base plate 123 at the upper end thereof. The partition wall part may be formed of at least one cylindrical partition wall extending substantially perpendicular to a central axis of the housing to prevent oil or the like collected on the housing bottom surface 112 from flowing over the periphery. However, the partition wall part should not completely block the flow of fluid, and should be configured to allow the movement of the fluid to a lower portion of the partition wall part. To this end, one or more openings 203 are formed in the lower portion of the partition wall part so that the fluid can flow along the housing bottom surface 112. For example, as shown in FIGS. 2 and 5, the lower portion of the partition wall part may be configured in a crown shape including a plurality of arch portions 202. The size and number of the arch portions 202 and the interval between the arch portions 202 can be appropriately selected based on the flow of the fluid, and preferably, a plurality of arch portions can be formed along the circumference of the partition wall at the same intervals. In addition, the shape of the opening 203 is not limited to the structure including the arch portions, and in the structure including the partition wall substantially perpendicular to the bottom of the base plate 123, it can be applied without limitation as long as it is a structure that allows fluid flow through the opening adjacent to a support surface 201 of the partition wall.

Even if the oil collected inside the oil collecting support fluctuates according to the movement of the vehicle, it is possible to restrict the oil from being discharged to the compressed air outside the oil collecting support 120 by the partition wall part. In addition, the oil collected inside the oil collecting support 120 can be continuously moved inside and outside the partition wall part through the opening of each partition wall part, so it has the effect of preventing oil adhesion.

According to a preferred embodiment of the present invention, the partition wall part may include at least two partition walls 121 and 122. In Fig. 2, the partition wall part is configured with two partition walls 121 and 122, and the two partition walls 121 and 122 are formed of a cylindrical partition wall concentric with the central axis. Fig. 4 shows a cross-section A-A', showing that two concentric cylindrical partition walls, that is, the first partition wall 121 and the second partition wall 122 are disposed with a predetermined regular interval therebetween. It is possible to obtain the effect that the central first chamber for collecting oil and the peripheral second chamber can be substantially partitioned by the concentric first partition wall 121 and the second partition wall 122 configured as described above. Therefore, due to the concentric partition walls, the amount of oil discharged to the outside of the oil collecting support 120 through the opening of the partition wall part may be reduced in two stages. In addition, the spring member 142 can be supported by the concentric partition walls so that the pressing force of the spring member 142 reaches the drying agent uniformly, thereby ensuring uniform drying performance over the entire area of the drying agent.

Further, as the oil absorption filter 141 is located above the second partition wall and is configured to compress the oil absorption filter 141 and the flange portion 136 by the second partition wall 122, the airtight performance of the oil adsorption filter 141 can be further improved. To this end, the flange portion 136 may be configured to sufficiently contact the base plate 123 above the second partition wall 122.

In this regard, the base plate 123 is integrally formed on the partition wall part and may include an inclined surface inclined downward in a radial direction from the central axis of the air dryer cartridge 100 so that oil can flow down the inclined surface. In this case, the base plate 123 supports the flange portion 136 by the inclined surface of the base plate. Meanwhile, a seating groove 124 for the spring member 142 is formed in the center of the base plate 123, and the cartridge container 130 is pressurized by the spring member 142 located in the seating groove 124. Preferably, as shown in FIG. 2, the spring member 142 sufficiently presses the cartridge container 130 to increase the density of the drying agent in the cartridge container 130, and in such a pressurized state, the flange portion 136 of the cartridge cap 130b may be configured to be supported by the upper surface of the base plate 123 of the oil collecting support 120.

The base plate 123 may extend in a radial direction to be sufficiently adjacent to the inner surface of the housing 110, and a check valve 125 may be positioned on the extended end thereof. The check valve 125 is configured to allow only one-way flow while in contact with the inner wall of the housing 110, and may preferably be made of a material with elasticity such as rubber.

As shown in Figs. 2 and 3, the check valve 125 may be fixed to an annular groove formed at the radial end of the base plate 123. The check valve 125 is configured to allow downward flow while being in close contact with the inner wall of the housing 110, while not allowing upward flow from the housing bottom surface 112. Therefore, even if a part of the collected oil passes through the partition wall part of the oil collecting support 120, it is restricted from being discharged to the outside by the check valve 125.

The bottom surface of the housing may be configured in an openable structure. Preferably, an oil outlet 113 with a thread on the inner wall may be formed on the housing bottom surface 112, and an end plug 114 screwed to the oil outlet 113 may be installed. Oil collected inside the oil collecting support 120 may be discharged to the outside as necessary through the oil outlet 113 of the housing 110 engaged with the end plug 114.

In addition, a sensor may be included to measure the amount of oil remaining inside the oil collection support 120. It may be configured to send an alarm warning the driver of oil discharge according to the detection result of the sensor.

According to a preferred embodiment of this invention, the air dryer cartridge has a bottom-up structure in which the spring member 142 presses the dryer upward, and in particular, the inlet 137 and the outlet in the filter cartridge of compressed air are located in the upper cover 150.

According to a preferred embodiment of the present invention, the air dryer cartridge may have a bottom-up structure in which the spring member 142 presses the drying agent in an upward direction. In particular, the air dryer cartridge has another feature in that the inlet and the outlet for the compressed air in the filter cartridge are located at the cover 150.

In this regard, the cover 150 coupled to the housing 110 to fix the cartridge container 130 inside is installed at the upper end of the cartridge container 130. Accordingly, the cover 150 is positioned at the open side of the housing 110 and functions as a cover of the open side of the housing 110. The cover 150 partially closes the open side of the housing 110. The fact that the open side of the housing 110 is partially closed means that movement of flow is restricted at the other region of the cover 150 except for an intake port and a discharge port for sending air into/out of the housing 110. Accordingly, the cover 150 is completely sealed so that flow cannot be moved into the housing 110 except for the intake port and the discharge port.

In relation to the cover 150, according to a preferred embodiment of the present disclosure, the cover 150, as in FIG. 2, may include a reinforcing plate 151 for reinforcing a compression structure inside the air dryer cartridge 100, and a seaming cap 152 fixed to the reinforcing plate 151 at an upper portion of the reinforcing plate 151 and fastened to the end of the housing 110 by flange-type seaming, etc. Meanwhile, unlike the fastening structure by flange-type seaming, the cover 150 may be configured to be completely fixed to the housing 110 through welding, etc.

The air dryer cartridge 100 is supposed to be directly mounted on a valve assembly of an air processing system, so the air dryer cartridge 100 should have a fastening structure for mounting on an air processing system. Accordingly, the cover 150 may include a fastening structure to be directly mounted on the valve assembly of an air processing system. Preferably, the reinforcing plate 151 is threaded around the discharge port at the center of the valve assembly. It can be configured to be screwed with the neck portion at the inlet side of the valve assembly.

Further, at least one intake port may be formed around the discharge port at the center of the reinforcing plate 131, and a flange of the seaming cap may be inserted and fixed in the intake port. In this case, a gasket 153 for hermetically keeping compressed air may be installed outside the seaming cap, that is, near the valve assembly. Preferably, the gasket 153 may be an annular gasket 153 having a cross-section that is open in a ' 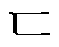 ' shape toward the central axis. Since the gasket 153 having a ' 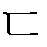 '-shaped cross-section is applied, sealing ability according to internal pressure is improved, so the hermetic ability of the air dryer cartridge 100 can be further improved. The upper portion of the annular gasket 153 is inserted and fixed in a recess of the seaming cap 152, and a protrusion that protrudes toward the central axis of the cartridge from the outside of the recess of the seaming cap may be formed. Accordingly, it is possible to have a 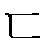 ''-shaped cross-sectional structure, as in FIG. 2, and when a cartridge is coupled to a valve housing (not shown) positioned at the upper side of the air dryer cartridge, the sealing ability according to internal pressure can be improved by the cross-sectional structure of the annular gasket 153.

Further, sealing members 145 and 146 may be inserted between each of the separated components, i.e., between the reinforcing plate 151 and the cartridge body 130a, and between the cartridge cap 130b and the cartridge body 130a, respectively, to sufficiently secure air tightness on the compressed air flow path inside the housing 110. The sealing member may be an O-ring, and a groove in which an O-ring can be fixed may be formed on the outer side of the cartridge cover 122 and the outer side of the reinforcing plate 131 so that the O-rings can be fixed while achieving a sufficient sealing effect.

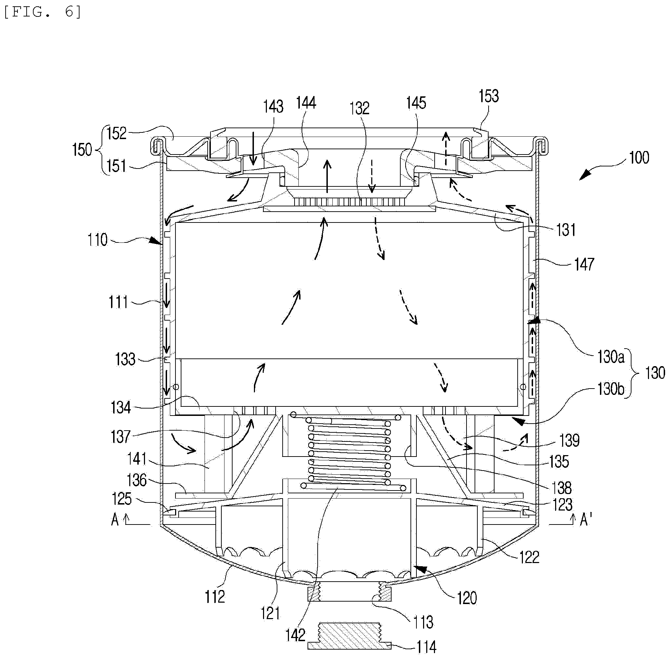

FIG. 6 shows airflow when compressed air is supplied and regenerated. Particularly, in FIG. 6, the solid line arrows indicate the case in which compressed air is supplied, and the dotted line arrows indicate airflow in regeneration.

The case when compressed air is supplied is described. Compressed air introduced through the compressor flows into the upper end of the housing 110 through the intake port of the cover 150 and then moves to the lower end of the housing through the gap 147 between the inner wall of the housing and the outer wall of the cartridge container 130. In this case, when the air passing through the gap 147 hits against the collision member 133 in the gap 147, and oil, etc. separate and remain on the collision member 133. For reference, the separated oil remains on the collision member 133 or drops to an oil sump on the bottom of the housing 110 along the outer wall of the housing 110 due to gravity. Thereafter, the separated oil flows toward the oil collection support 120 of the housing bottom surface 112, and the separated oil remains inside the oil collection support 120.

The compressed air that has passed through the gap 147 is secondarily filtered through the oil adsorption filter 141. And then, the compressed air passes through the drying agent inside the cartridge container 130, thereby undergoes a tertiary filtering process in which moisture is removed. The compressed air processed by the three-stage filtering process is discharged to the valve assembly through the discharge port.

Such 3-stage filtering process can provide an improved cleaning effect to the compressed air that has passed through the air dryer cartridge 100.

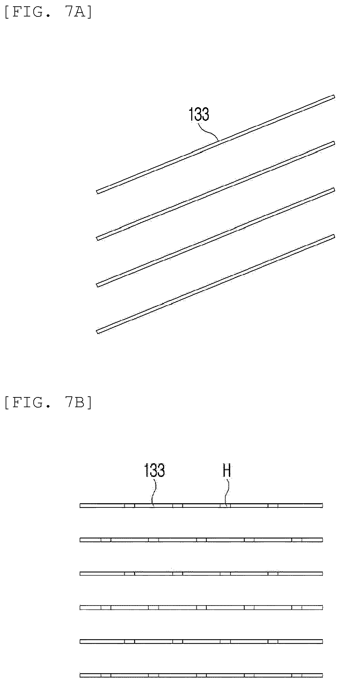

FIGS. 7a to 7d show a detailed examples of the collision member 133 installed on the outer wall of the dryer cartridge according to the present disclosure.

Each of the collision members 133 is disposed in the gap 147 between the housing 110 and the cartridge container 130, and may be integrally formed with the cartridge container 130 through injection molding. However, as described above, the collision member 133 may be also formed on the inner wall of the housing 110. For example, the collision member 133 may be formed by forming wrinkles on the outer wall of the metallic housing. However, the housing 110 should be formed to be able to resist high pressure, so it is more preferable in terms of stress concentration that the collision member 133 is integrally formed with the cartridge container 130. It is exemplified that the collision member 133 is formed on the cartridge container 130 in the following description, and the collision member 133 formed on the housing 110 may also have a corresponding structure.

Further, FIGS. 7a to 7d show blade type protrusion.

In detail, the blade type protrusion may be at least one blade type protrusion that is continuously extended to be able to guide air from the downstream side of the gap 147 to the upper portion of the gap 147.

In this case, the collision member 133, as shown in FIG. 7a, may be a spiral blade type protrusion, or as shown in FIG. 7b, may be a blade type protrusion having a horizontal section 133a and an inclined section 133b. The forming of at least one blade type protrusion means that only one protrusion is continuously formed around the cartridge container 130 or several continuous protrusions may be extended around the cartridge container 130 with a predetermined gap therebetween.

In the example of including several protrusions, the number of channels through which compressed air can flow is increased in comparison to when the collision member 133 is comprised of only one protrusion. The number and angle of the blade type protrusions may be appropriately adjusted in accordance with the required airflow, oil filtering performance, etc.

As shown in FIG. 7a, the spiral blade type protrusion has a structure that extends at a predetermined angle from the horizontal plane. The spiral blade type protrusion is configured such that airflow is relatively smooth and oil can be separated by centrifugal force. However, since air and the protrusion do not sufficiently hit against each other, the oil filtering effect may be relatively limited.

Further, FIG. 7b shows an example including several horizontal blade protrusions. As shown in FIG. 7b, the collision member 133 has several horizontal blade protrusions spaced apart from each other and extending in parallel with the horizontal plane perpendicular to the central axis of the cartridge container 130. Several flow holes H are formed at the horizontal blade protrusions so that air can move between the upstream side and the downstream side of the gap 147. In this example, the horizontal blade protrusion cannot function as an air flow passage between the upstream side and the downstream side, and functions only a chamber for compressed air. Accordingly, air flow holes H should be formed at the horizontal blade protrusion so that compressed air can move upward in this embodiment. The air flow holes H may be formed with regular intervals on the horizontal blade protrusions and the holes on the adjacent horizontal blade protrusions are alternately disposed in the vertical direction that is parallel with the central axis, whereby it is possible to improve the oil filtering performance according to collision of air.

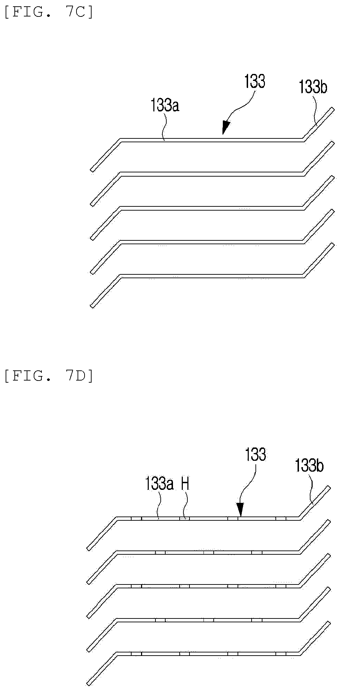

Meanwhile, FIG. 7c shows an example, in which the spiral blade of FIG. 7a and the horizontal blade of FIG. 7b are combined. Referring to FIG. 7c, the collision member 133 in this embodiment includes a horizontal section 133a that is parallel with the horizontal plane perpendicular to the central axis of the cartridge container 130, and an inclined section 133b inclined at a predetermined angle with respect to the horizontal plane. Preferably, the horizontal section 133a and the inclined section 133b are alternately disposed in the extension direction, so when air rotates at a high speed, an oil filtering effect by centrifugal force can be implemented while the air flows up. Meanwhile, since air can sufficiently bump against the protrusion while the flow of the air changes, an oil filtering effect by collision can also be achieved. In this case there may be a problem that the separated oil partially adheres to the horizontal section 133a while flowing down along the inclined surface.

Accordingly, in a preferred embodiment of the present disclosure, the horizontal section 133a may be inclined so that the separated oil can be collected downward by gravity without adhering to the blade. In this example, the horizontal section 133a is also extended with a predetermined angle not parallel with the horizontal plane, so the collision member 133 is configured to include two or more protrusion groups having different angles.

Further, in order to prevent oil from adhering at the horizontal section 133a, as in FIG. 7d, at least one flow hole H may be formed in the direction of the central axis at the horizontal section 133a. The flow hole H is substantially perpendicular to the flow of air, so it does not influence the airflow and mainly discharges downward the adhering oil.

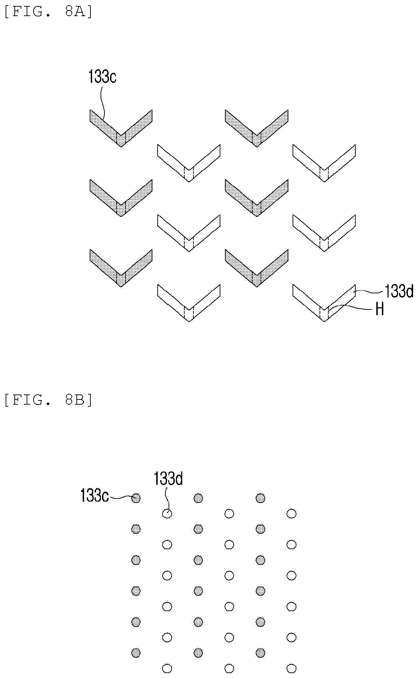

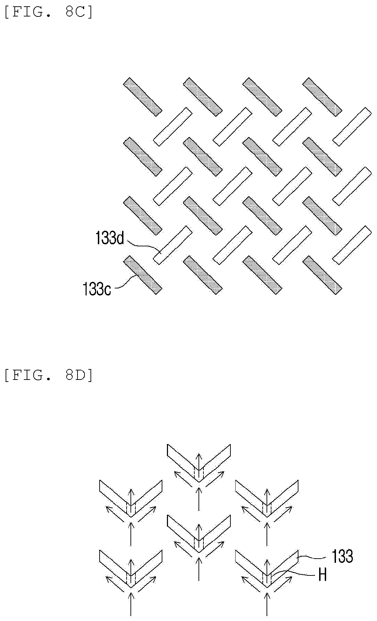

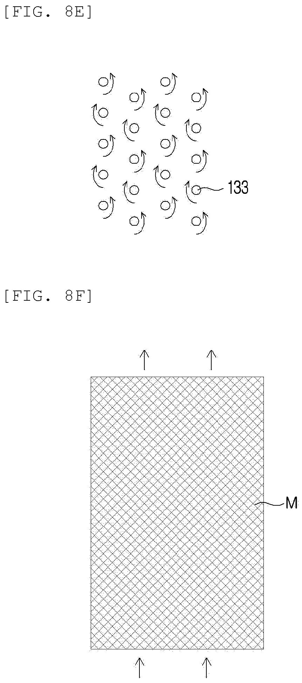

FIGS. 8a to 8c show examples in which the collision member 133 is comprised of several protrusions disposed to have a predetermined pattern.

In the examples of FIGS. 8a to 8c, the collision member 133 protrudes around the outer surface of the cartridge container 130 and is comprised of several protrusions spaced apart from each other to be able to interfere with airflow between the upstream side and the downstream side of the gap 147.

In particular, the protrusions may include a first group 133c comprised of several protrusions spaced apart from each other with regular intervals in parallel with the horizontal plane perpendicular to the central axis of the cartridge container 130, and a second group 133d comprised of several protrusions alternately disposed with the protrusions 133c of the first group and spaced apart from each other with regular intervals in parallel with the horizontal plane. In this case, the protrusions 133c of the first group and the protrusions 133d of the second group, as in FIGS. 8a to 8c, may be alternately disposed in the direction of the central axis.

In detail, FIG. 8a shows that the protrusions are V-shaped protrusion. In the case of such a 'V'-shaped protrusion, compressed air hits against the V-shaped protrusions while moving upwardly or downwardly, as in FIG. 8a, whereby oil is separated. Meanwhile, though not shown, the V-shaped protrusions may be inversed V-shaped, that is, Λ-shaped protrusions. However, unlike the inverted A-shaped protrusion, the V-shaped protrusion may excessively limit the flow of compressed air when supplying compressed air and form unnecessary vortex, so it is preferable to apply the A-shaped protrusion. According to the Λ-shaped protrusions, when air flows in the opposite direction, that is, in regeneration, the flow of compressed air is restricted too. However, unlike process of supplying the compressed air, the compressed air is already regenerated through the drying agent and then passes through the collision member 133, so the influence on regeneration relatively small. Further, flow of the compressed air is restricted by the A-shaped protrusions and the flow speed of the air is decreased, whereby it is possible to reduce noise due to the air that is discharged to the atmosphere in regeneration.

Meanwhile, oil may be accumulated at the grooves of the V-shaped protrusions and A-shaped protrusions. In order to solve the problem that oil is excessively accumulated, flow hole H for discharging oil may be formed at the V-shaped protrusions or Λ-shaped protrusions. However, the oil accumulated on the V-shaped protrusions or Λ-shaped protrusions can be periodically discharged by hitting of the compressed air that flows inside in regeneration, so the flow hole H may be omitted.

FIG. 8b shows an example in which the protrusions are circular protrusions, as another embodiment of the present disclosure. According to the circular protrusions, air substantially smoothly flows in comparison to the V-shaped protrusions described above, but the oil filtering effect is relatively insufficient.

FIG. 8c shows an example in which plate-shaped protrusions are disposed in opposite directions in groups. As shown in FIG. 8c, in this embodiment, the protrusions 133c of the first group are plate-shaped protrusions formed to have a predetermined angle with respect to the horizontal plane, and the protrusions 133d of the second group are plate-shaped protrusions extending perpendicular to the protrusions 133c of the first group. According to the structure of the collision member 133, air can relatively smooth flow and a good oil filtering effect can be achieved by hitting against the plate-shaped protrusions.

Next, FIG. 8f shows an example in which the collision member is formed in a mesh net M. In the example of FIG. 8f, while air passes through the meshes of the mesh net M, oil is primarily filtered out by the mesh net M. Meanwhile, when the mesh net M is densely formed, there may be a side effect that oil excessively adheres to the mesh net M, thereby completely blocking airflow. Considering this problem, a low-density mesh net may be used with any one of the collision members 133 of FIGS. 7a to 7d or any one of the collision members 133 of FIGS. 8a to 8c described above.

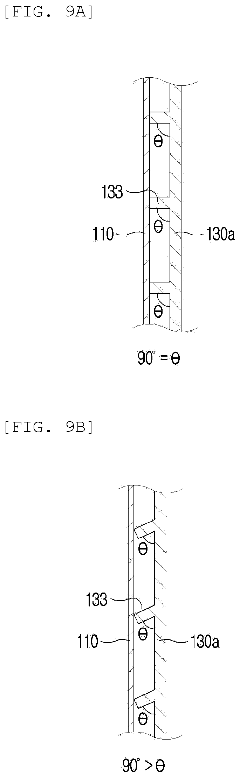

Next, FIGS. 9a and 9b show an example in which the side angle of the collision member 133 is changed. Here, the side angle means the angle θ made between the bottom of the protrusion and the outer surface of the cartridge container 130.

First, FIG. 9a shows the case in which the angle θ made between the bottom of the protrusion and the outer surface of the cartridge container 130 is 90 degrees and FIG. 9b shows the angle θ is less than 90 degrees.

When the angle θ is set as 90 degrees, as in FIG. 9a, there is an advantage that it is easy to integrally form the protrusions with the cartridge container 130 through injection molding.

Meanwhile, as in FIG. 9b, when the angle θ is less than 90 degrees, the protrusions face down, so there is an effect that oil naturally flows down without being accumulated.

Further, when they are combined with the blade type protrusions, there is an effect that air smoothly flows when compressed air is supplied and regenerated. If when compressed air flows substantially upward from the lower portion, the flow of the compressed air is interfered with the protrusions facing down, so the compressed air may be partially lost in the supply process. However, according to a preferred embodiment of the present disclosure, since the continuous blade type protrusions including a spiral section are substantially in close contact with the wall of the housing 110, they can remove this defect while functioning as channels for guiding compressed air. Accordingly, when the continuous blade type protrusions including a spiral section are formed, it is possible to effectively suppress accumulation of oil by forming the protrusions at an angle less than 90 degrees, as in FIG. 6b. Accordingly, the angle θ of the protrusions may in the range of 0° < θ ≤ 90°, and more preferably, the angle of the protrusions may be in the range of 45° < θ ≤ 90°.

### Industrial Applicability

The present disclosure was described above on the basis of embodiments and the accompanying drawings. However, the range of the present disclosure is not limited by the embodiments and drawings and may be limited only by claims to be described below.

## Claims

1. An oil collecting air dryer cartridge for a compressed air processing system for a commercial vehicle, the air dryer cartridge comprising:
a housing having having an open upper end and a closed lower end;
a cartridge container located inside the housing and containing a drying agent therein; and
an oil collecting support for collecting oil separated from compressed air flowing into the cartridge container.

2. The air dryer cartridge of claim 1, wherein the oil collecting support includes at least one partition wall part standing on a bottom surface inside the housing and a base plate formed on an upper end of the partition wall part.

3. The air dryer cartridge of claim 2, further comprising:
a check valve configured to allow one-way flow while contacting an inner wall of the housing at a radial end of the base plate of the oil collecting support.

4. The air dryer cartridge of claim 3, further comprising:
an oil adsorption filter installed on the cartridge body to filter oil at the front end of the inlet of the cartridge body;
wherein the check valve is configured to allow downward flow toward the bottom surface of the housing, and the oil separated from the oil adsorption filter is collected in the internal space of the support for collecting oil through the check valve.

5. The air dryer cartridge of claim 1, wherein the cartridge container is located above the oil collecting support, and
the cartridge container includes a cylindrical cartridge having an air outlet formed in the center of the upper end and an open lower end, and a cartridge cap having an air inlet and coupled to the open lower end of the cartridge body.

6. The air dryer cartridge of claim 1, further comprising:
a spring member installed on a seating groove of the base plate for collecting oil to press the cartridge container; and
a cover configured to close the open upper end of the housing and having an intake port and a discharge port so that air can move into the housing.

7. The air dryer cartridge of claim 2, wherein the partition wall part of the oil collecting support includes two or more cylindrical partition walls, and all of the cylindrical partition walls are concentric.

8. The air dryer cartridge of claim 7, wherein the cylindrical partition walls form a plurality of openings through which fluid flows between a bottom surface of the housing and lower portions of the cylindrical partition walls.
wherein a plurality of openings, through which fluid flow between a bottom surface of the housing and thereof, are formed in lower portions of the partition walls.

9. The air dryer cartridge of claim 8, wherein the lower portions of the cylindrical partition walls have a crown shape.

10. The air dryer cartridge of claim 1, wherein a gap for movement of compressed air is formed between an outer surface of the cartridge container and an inner wall of the housing, and
a collision member is formed in the gap to filter out oil when air moving in the gap bumps against the collision member.

11. The air dryer cartridge of claim 10, wherein the collision member protrudes from the outer surface of the cartridge container or the inner wall of the housing, and is comprised of at least one blade type protrusion continuously extending to be able to guide air moving through the gap.

12. The air dryer cartridge of claim 11, wherein the collision member is a spiral blade type protrusion.

13. The air dryer cartridge of claim 11, wherein the collision member is a blade type protrusion in which a horizontal section parallel with a horizontal plane perpendicular to a central axis of the cartridge container and an inclined section inclined at a predetermined angle with respect to the horizontal plane are alternately disposed.

14. The air dryer cartridge of claim 13, wherein several flow holes are formed in the direction of the central axis at the horizontal section of the blade type protrusion.

15. The air dryer cartridge of claim 11, wherein the collision member has: several horizontal blade protrusions spaced apart from each other and extending in parallel with the horizontal plane perpendicular to the central axis of the cartridge container; and several flow holes formed at the horizontal blade protrusions so that air can move between the upstream side and the downstream side of the gap.

16. The air dryer cartridge of claim 1, wherein the collision member is comprised of several protrusions protruding from the outer surface of the cartridge container or the inner wall of the housing and spaced apart from each other to interfere with flow of air between the upstream side and the downstream side of the gap.

17. The air dryer cartridge of claim 16, wherein the protrusions include a first group comprised of several protrusions spaced apart from each other with regular intervals in parallel with the horizontal plane perpendicular to the central axis of the cartridge container, and a second group comprised of several protrusions alternately disposed with the protrusions of the first group and spaced apart from each other with regular intervals in parallel with the horizontal plane; and the protrusions of the first group and the protrusions of the second group are alternately disposed in the direction of the central axis.

18. The air dryer cartridge of claim 17, wherein the protrusions are Λ-shaped protrusions.

19. The air dryer cartridge of claim 17, wherein the protrusions are circular protrusions.

20. The air dryer cartridge of claim 17, wherein the protrusions of the first group are plate-shaped protrusions formed to have a predetermined angle with respect to the horizontal plane, and the protrusions of the second group are plate-shaped protrusions extending perpendicular to the protrusions of the first group.

21. The air dryer cartridge of claim 11 or 17, wherein the protrusions are formed on the outer surface of the cartridge container, and are formed to face down such that an angle θ made between the bottom of the protrusion and the outer surface of the cartridge container is in the range of 0° < θ ≤ 90°.
